Europäisches Patentamt

European Patent Office

Office européen des brevets

(11) Veröffentlichungsnummer: **0 159 686**
**B1**

(12) **EUROPÄISCHE PATENTSCHRIFT**

(45) Veröffentlichungstag der Patentschrift: **18.07.90**

(21) Anmeldenummer: **85104852.0**

(22) Anmeldetag: **22.04.85**

(51) Int. Cl.⁵: **A 01 C 15/02, A 01 C 17/00**

(54) **Rotationsstreugerät.**

(30) Priorität: **27.04.84 US 604987**

(43) Veröffentlichungstag der Anmeldung:
**30.10.85 Patentblatt 85/44**

(45) Bekanntmachung des Hinweises auf die
Patenterteilung:
**18.07.90 Patentblatt 90/29**

(84) Benannte Vertragsstaaten:
**DE FR GB**

(56) Entgegenhaltungen:
**FR-A-2 331 947**
**US-A-1 998 966**
**US-A-2 287 080**
**US-A-2 550 303**
**US-A-3 193 297**
**US-A-3 411 719**

(73) Patentinhaber: **O.M.Scott + Sons Company**
**14111 Scottslawn Road**
**Marysville Ohio 43041 (US)**

(72) Erfinder: **Amerine, James Dalton**
**17230 Poling Road**
**Marysville Ohio 43040 (US)**

(74) Vertreter: **Gore, Peter Manson et al**
**W.P. THOMPSON & CO. Coopers Building**
**Church Street**
**Liverpool L1 3AB (GB)**

Courier Press, Leamington Spa, England.

## Beschreibung

Die Erfindung betrifft ein Rotationsstreugerät für gekörntes Material, insbesondere ein Rotationsstreugerät wie es von Hausbesitzern zur Verteilung von Düngemitteln, Plazenschutzmitteln oder Saatgut auf den Boden oder auf Rasen verwendent wird.

Streugeräte, sowohl Fallstreugeräte wie Rotationsstreugeräte, wie man sie in Hausgärten verwendet, erfordern für gewöhlich einen Hebel zum Öffnen und Schließen der Austrittsöffnungen. Der Benutzer des Gerätes bedient den Hebel zur Vermeidung von ungleichen Streumustern beim Wenden und Abstoppen. Hält man, ohne die Öffnungen zu verschließen, das Streugerät an, so entlädt sich das Material weiter, wodurch eine zu hohe Verteilung desselben und häufig eine Beschädigung des Rasens oder sonstigen Bewuchses bewirkt wird.

Rotationsstreugeräte besitzen zusätzlich einen weiteren charakteristischen Nachteil. Das gekörnte Material fällt auf ein bestimmtes Segment der Streuscheibe und diese verteilt das Material in einem fächerförmigen Muster vor dem Streugerät und zu den Seiten hin. Auf diese Weise soll vermieden werden, daß das gekornte Material gegen den Betreiber des Streugerätes geschleudert wird. Die Gesamtstreuweite beträgt 50 bis 100% oder noch mehr des effektiven Streukegels. Benachbarte Muster Überlappen sich dann deutlich und stellen eine vollständige Bedeckung des Rasens oder Bodens sicher. Zusätzlich besitzen alle Leitbleche auf der Streuscheibe eines typischen Rotationsstreugerätes die gleiche Länge und Form. Das gesamte gekörnte Material wird deshalb von der Streuscheibe in einem halbwegs gleichmäßigen radialen Abstand weggeschleudert, wobei die Neigung besteht, ein schräges oder ungleichmäßiges Streumuster zu erzeugen.

Rotationsstreugeräte, wie sie bei der gewerblichen Verwendung zum Einsatz kommen, besitzen für gewöhnlich eine Vorrichtung zur Einstellung des Streumusters, um entsprechend dem unterschiedlichen Materialeigenschaften eine derartige Schrägverteilung zu eleminieren. Bei den herkömmlichen Streugerätenfär Hausgärten ist üblicherweise eine derartige Einstellvorrichtung nicht vorhanden. Als Folge davon neigen derartige Geräte zur Ausbildung eines schrägen Streumusters, wenn ein beliebiges Material und nicht das günstige Material verwendet wird, für das das Gerät konstruiert ist. Außerdem entstehen Anhäufungen, wenn sich die Streumuster an den Seiten überlappen, sofern der Streubereich nicht auf einen schmalen nach vorn gerichteten Ausschitt begrenzt ist.

Die weitreichende Streuweite, relative zur tatsächlichen Streuschwadenweite, verschlimmert die durch den Kanteneffekt verursachte geringe Bedeckung an den Rändern von Rasenflächen bzw. die über die Rasenflächen hinausgehende Streuwirkung. Die weitreichende Streuweite erhöht auch die Abdriftmöglichkeit und vergrößert die Gefahr, daß das gekörnte Material auf einen Bewuchs geschleudert wird, der eigentlich nicht als Ziel hierfür ausersehen ist.

US—A—1 998 966 offenbart eine Splittstreumaschine, bei der der Behälter nahe bei zwei Ventilplatten befestigt ist, um eine Ausfließen des Materials aus ihm zu verhindern. In US—A—2 287 080 wird ein Streugerät mit Leitblechen unterschiedlicher Länge beschreiben, obgleich alle denselben radialen Abstand vom Zentrum besitzen. In US—A—3 411 719 sind übereinander gestapelte Streuscheiben gezeigt, wobei die unterschiedlichen Streuscheiben unterschiedliche Leitblechlängen besitzen. Die US—A—3 478 970 offenbart unterschiedliche Leitblechlängen auf eine Streuscheibe mit nach oben gerichtetem Materialfluß. In US—A—839 394 und US—A—3 094 333 sind Streugeräte mit einem Streumuster von 360° gezeigt.

FR—A—2331947 beschreibt ein Materialstreugerät zur gleichmäßigen Verteilung von teilchenförmigem Material wie z.B. Düngemitteln, Pestiziden or Sattgut auf den Boden oder auf die Vegetation. Das Materialstreugerät besteht aus einem Behälter für teilchenförmiges Material, das sich für die Fortbewegung entlang einer vorgegebenen Richtung eignet, wobei der Behälter einen Auslaß zur Abgabe des teilchenförmigen Materials nach unten umfaßt, eine Streuscheibe in Verbindung mit dem Auslaß zur breiten Auswerfung des abgegebenen Materials in einem generell radialen Weg, und eine Abschirmung, welche die Streuscheibe umgibt und derart ausgerichtet ist, den Weg des breit ausgeworfenen Materials zu durchkreuzen und das Material nach unten in einen Bereich gesteuerter Konfiguration abzulenken. Die Abschirmung ist vorzugsweise bei horizontalem Querschnitt elliptisch gewölbt und besitzt eine Breite entlang der Fortbewegungsrichtung des Streugeräts, die kleiner ist als die Breite entlang einer Richtung, die quer zur Fortbewegungsrichtung ist. Der Abgabeauslaß im Streugerät ist vorzugsweise symmetrisch zur Streuscheibe ausgerichtet, so daß das Material weitgehend in einem 360°C—Weg um die Auslaßachse herum breit ausgeworfen wird.

Keine der genannten Druckschriften legt jedoch eine Lösung der im Hinblick auf die eingangs beschriebenen Streugeräte aufgezeigten Probleme nahe. Hier will die Erfindung Abhilde schaffen.

In der vorliegenden Erfindung wird ein Rotationsstreugerät vorgesehen mit einem Behälter für teilchenförmiges Material und einer Streuscheibe, die unter dem Behälter angeordnet ist und bei Fortbewegung des Streugeräts in Rotation versetzt wird, wobei der Behälter einen Auslaß mit Auslaßöffnungen aufweist, welche im Zentralbereich des Behälters und in Abständen um die Auslaßachse herum angeordnet sind, durch deren Öffnungen das zu verteilende Material auf die Streuscheibe fällt, dadurch gekennzeichnet, daß die Auslaßöffnungen derart angeordnet sind, daß das Material auf den Zentralbereich der Streuscheibe abgegeben wird, wobei

die Streuscheibe radiale Leitbleche und darüber hinaus eine Ringleiste aufweist, die den den Auslaßöffnungen zugewandten Zentralbereich der Streuscheibe eingrenzt, wobei die Streuscheibe in ausreichender Nähe unterhalb des Behälters montiert ist, so daß bei Nicht-Rotieren der Streuscheibe die Ringleiste das abgegebene teilchenförmige Material innerhalb des eingegrenzten Zentralbereich der Streuscheibe aufnimmt, um einen weiteren Fluß des teilchenförmigen Materials zu verhindern, nachdem es zu einer Ansammlung des teilchenförmigen Materials innerhalb des eingegrenzten Zentralbereich gekommen ist.

Die Erfindung, wie sie in den Ansprüchen gekennzeichnet ist, löst die Aufgabe, ein Rotationsstreugerät anzugeben, bei dem das Problem der kontinuierlichen Materialabgabe auf einfache Weise gelöst ist. Bei dem Rotationsstreugerät nach der Erfindung geschieht dies durch eine auf der Streuscheibe angeordnete Ringleiste, die den inneren Teil der Streuscheibe umgibt. Die Streuscheibe ist nahe dem Boden des Behälter befestigt, so daß gekörntes Material nicht ausfließt, wenn die Auslaßöffnungen offen sind und die Streuscheibe sich nicht dreht. Eine kleine Menge von gekörntem Material baut sich an der Innenseite der Ringleiste auf, wodurch ein weiterer Materialfluß gestoppt wird. Sobald die Streuscheibe sich zu drehen beginnt, wird das Material über die Ringleiste hinausgeschleudert und das Streugerät arbeitet so, als ob diese garnicht vorhanden wäre. Zusätzlich ergibt sich durch die Erfindung in ihrer bevorzugten Ausbildungsweise eine Verteilung des gekörnten Materials in einem einheitlichen Kreisbogen von 360° um das Streugerät herum. Auf diese Weise wird eine Schrägverteilung vermieden und eine Einstellung des Streumusters wird überflüssig. Es Können noch eine Vielzahl vom Leitblechlängen auf der Streuscheibe vorgesehen sein, damit das teilchenförmige Material in unterschiedlichen radialen Abständen weggeschleudert wird, so daß man eine bessere Verteilung und eine höhere Gleichförmigkeit des Streumusters bekommt.

Genauer gesagt betrifft die Erfindung ein Rotationsstreugerät für teilchenförmiges Material, angepaßt der Fortbewegung längs eines gegebenen Weges, wobei des Gerät einen Behälter zur Aufnahme des teilchenförmigen Material aufweist sowie ferner eine in einem Rahmen drehbar gelagerte Streuscheibe, die bei Fortbewegung des Streugerätes in eine Drehbewegung versetzt wird. Der Behälter besitzt einen Auslaß aus einer Reihe von Öffnungen, die das zu verteilende Material auf die Streuscheibe entladen, von wo es weggeschleudert wird. Die Auslaßöffnungen sind so angeordnet, daß des Material auf den inneren Teil der Streuscheibe entladen wird. Die Streuscheibe besitzt eine Ringleiste, die den Auslaß umgibt und nahe am inneren Teil der Streuscheibe angeordnet ist. Diese ist unmittelbar unter dem Behälter und hinreichend nahe an ihm angebracht. Wenn die Streuscheibe sich nicht dreht, so hält die Ringleiste das entladene Material innerhalb des Zentralbereichs der Streuscheibe und unterbricht einen weiteren Materialfluß, nachdem sich innerhalb des Zentralteils das teilchenförmige Material aufgebaut hat. In der bevorzugten Form sind die Öffnungen in den Behälter im wesentlichen im gleichen Abstand um den Auslaß angeordnet, so daß das Material auf die Streuscheibe in einen Kreisbogen von 360° entladen wird. Die Streuscheibe enthält mindestens zwei Sätze radial angeordneter Leitbleche, der erste von ihnen endet in einem anderen radialen Abstand vom Zentrum der Streuscheibe als der zweite Satz.

Das Streugerät wirft somit das teilförmige Material gleichmäßig in einen Kreisboten von 360° um das Gerät herum, wenn dieses in Fahrrichtung bewegt wird.

Die Erfindung wird nachstehend anhand der beigefügten Zeichnungen beschrieben.

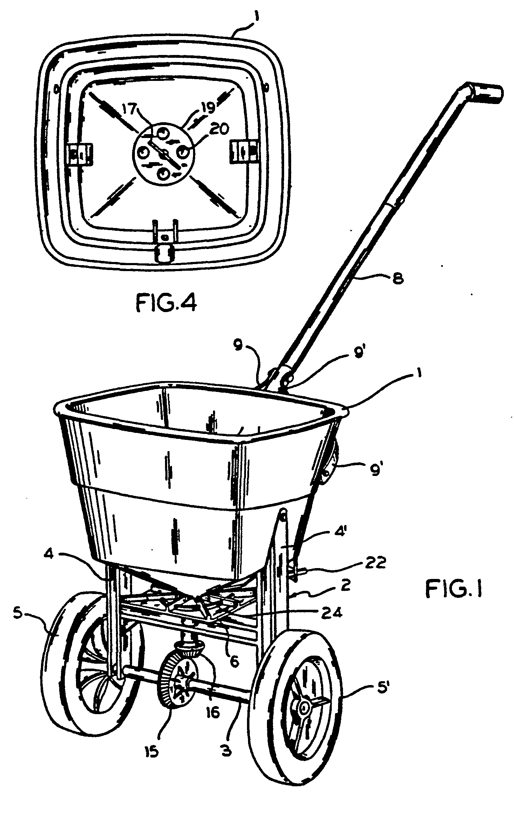

Fig. 1 zweigt die perspektivische Ansicht eines Streugerätes nach der vorliegenden Erfindung,

Fig. 2 zeigt die Frontansicht des Gerätes nach Fig. 1, mit Durchblick auf den zentralen unteren Innenteil des Behälters.

Fig. 3 zeigt eine Seitenansicht des Gerätes nach Fig. 1,

Fig. 4 zeigt den Grundriß des Behälters aus den Fig. 1 bis 3,

Fig. 5 zeigt einen vergrößerten Ausschnitt des Aufrisses eines Teils des Gerätes nach Fig. 1,

Fig. 6 zeigt den Grundriß der Streuscheibe aus den Fig. 1 bis 5,

Fig. 7 zeigt einen Schnitt durch die Streuscheibe längs der Linien 7—7 in Fig. 6.

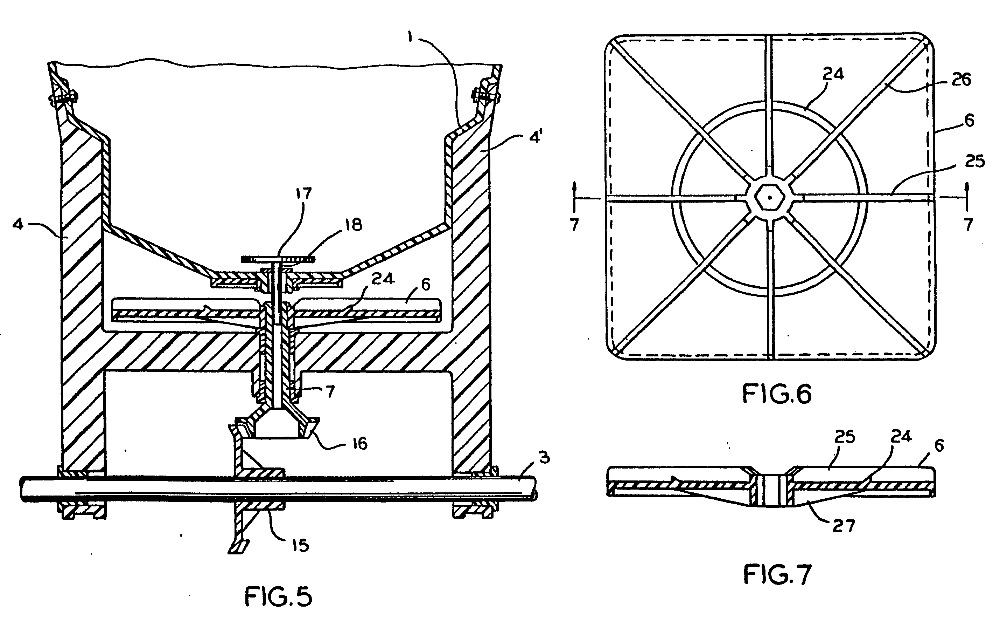

Das Rotationsstreugerät nach der Erfindung besteht aus dem Behälter in für teilchenförmiges Material, der durch einen H-förmigen Rahmen 2 getragen wird. Der Rahmen 2 ist auf der Achse 3 befestigt, die in den unteren Enden der senkrechten Streben 4 und 4' des Rahmens 2 drehbar gelagert ist. An der Achse sitzen ferner die beiden Räder 5 und 5'. Die entgegengesetzten Enden der Streben 4 und 4' sind mit dem Gehäuse 1 verschraubt. Die Streuscheibe 6 ist horizontal an der senkrecht verlaufenden Hohlwelle 7 (Fig. 5) befestigt, die an ihrem unteren Ende über ein Getriebe in eine Drehbewegung versetzt wird. Mit Hilfe zweier Streben 9 und 9' und dem Stützfuß 10, die an dem Gehäuse verschraubt sind, ist der Handgriff 8, der der Fortbewegung des Streugerätes dient, an dem Behälter 1 befestigt. Mindestens eines der Räder 5 und 5' ist auf der Achse 3 fest angebracht, so daß über das Kegelradgetriebe 15, das fest auf der Achse 3 sitzt, eine Kraft auf die Welle 7 übertragen wird, wobei das Kegelradgetriebe 15 in das kleinere, fest auf der Welle 7 sitzende konische Zahnrad 16 eingreift. In dem Behälter 1 ist die Schütteleinrichtung 17 fest auf der in dem Hohlraum der Welle 7 angeordneten Welle 18 angebracht. Man erkennt, daß sich die Räder in einer Antriebsverbindung mit der Welle 7 befinden, um die Streuscheibe 6 und gegebenenfalls die Schütteleinrichtung 17 zur Rotation zu bringen.

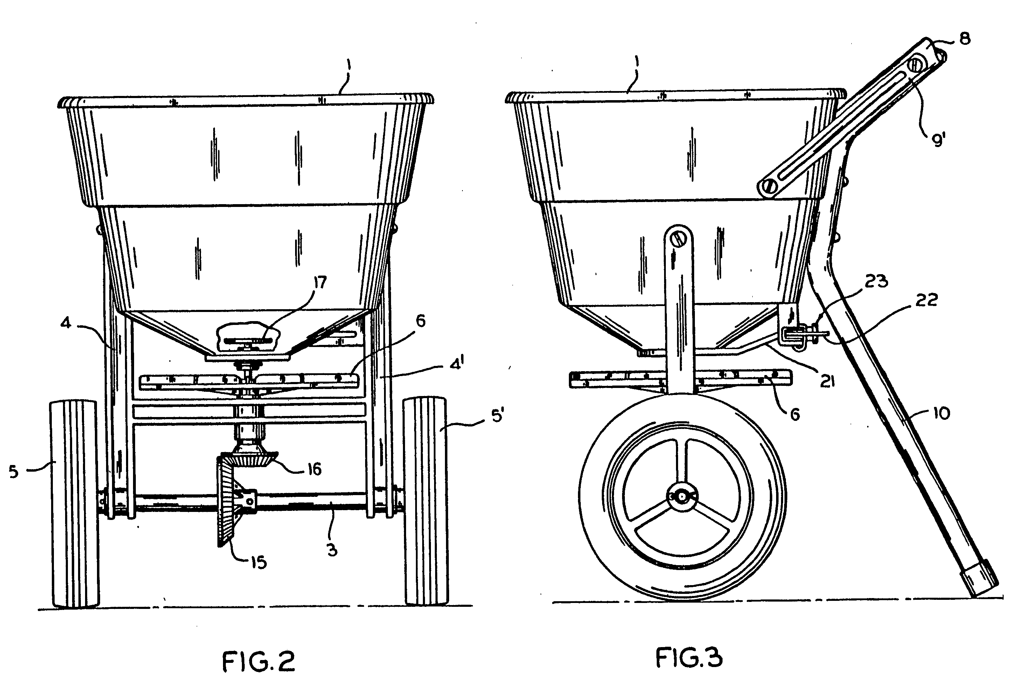

Der Auslaß 19 des Behälters 1 wird in Fig. 4 gezeigt, er enthält vier identische Öffnungen 20, die im gleichen Abstand um die Auslaß Achse herum angeordnet sind, so daß das Material auf die Streuscheibe in einem Kreisbogen von 360° verteilte wird. Der Durchmesser der vier Auslaßöffnungen 20 läßt sich durch den Vershclußhebel 21 einstellen (siehe Fig. 3). Der Hebel 21 enthält vier Öffnungen der gleichen Größe wie die Auslaßöffnungen 20. Durch beliebige waagrechte Verstellung des Hebelgriffs 22 lassen sich die Öffnungen in dem Hebel 21 nicht, teilweise oder gänzlich mit den Auslaßöffnungen 20 zur Deckung bringen. Die Anzeigevorrichtung 23 mit Griffknopf und Schieber läßt sich durch Lösen des Griffknopfes, Verschieben der Anzeigevorrichtung in die richtige Streustellung und Arretieren des Griffknopfes einstellen. Der Hebelgriff 22 kann dann in Richtung der eingestellten Anzeigevorrichtung bewegt werden, entsprechend der "Offen" Einstellung des Streugerätes oder der dazu entgegengestzten Stellung, um den Materialausfluß zu stoppen.

Die Streuscheibe 6, wie sie in den Fig. 5 bis 7 verdeutlicht wird, ist unmittelbar unter dem Behälter 1 angebracht. Sie kann verschiedene Formen besitzen, für gewöhnlioch ist sie jedoch rechteckig und weist bevorzugt die in den Zeichnungen dargestellte quadratische Form auf. Sie enthält die Ringleiste 24, die den Auslaß des Behälters kreisförmig umgibt und einen Durchmesser besitzt, der geringfügig größer ist als der Durchmesser des Auslasses 19. Die Ringleiste 24 umschießt den Innenteil der Streuscheibe und dient dazu, das teilchenförmige Material festzuhalten, das bei Nichtrotieren der Streuscheibe aus dem Auslaß 19 austritt. Die Streuscheibe 6 weist acht Leitbleche auf, und zwar einen Satz von vier kurzen radialen Leitblechen 25 und einen Satz von vier langen radialen Leitblechen 26, beide Sätze enden in unterschiedlichen Abständen vom Zentrum der Streuscheibe. Wie aus Fig. 7 ersichtlich, ist die Ringleiste 24 wesentlich niedriger als die Leitbleche. Die Leitbleche 25 und 26 können z.B. eine Höhe von ca. 0,64 cm gegenüber ca. 0,16 cm der Ringleiste 24 besitzen. Die Streuscheibe enthält ferner acht radial angeordnete Verstärkungsrippen 27 auf der Unterseite.

Beim Betrieb des Gerätes wird das teilchenförmige Material gleichmäßig um die Streuscheibe herum entladen. Bei der gezeigten Ausbildungsform erfolgt die Entladung an vier voneinander um 90° versetzten Punkten. Auf diese Weise wird das Material in einem einheitlichen Kreismuster von 360° weggeschleudert und ein Abschrägen, wie es durch Anwendung eines bestimmten Segmentes hervorgerufen wird, fällt weg. Die Streuscheibe besitzt einen geringeren Durchmesser als üblicherweise und das Übersetzungsverhältnis zwischen Kegelradgetriebe 15 und konischem Zahnrad 16 ist verhältnismäßig niedrig, so daß die Streuscheibe langsamer rotiert als es bei den üblichen Gartenstreugeräten üblich ist. Die Spitzengeschwindigkeit der Streuscheibe liegt bei ca 149 m/min. bei 4424 m/Std. für das Streugerät nach der Erfindung, verglichen mit ca. 282 m/min.

eines der üblichen heute verwendeten Rotationsstreugeräte. Die langsamere Rotationsbewegung und der kleinere Durchmesser der Streuschiebe beschränkt den Durchmesser der Gesammtstreubreite auf ca. 1 m. Da die effektive Streuschwadenweite 0,76 m beträgt, sorgt das Streugerät für eine entsprechend abgeschrägt Überlappung ohne excessive Streuschwadenweite, wie sie für die heute verwendeten Rotationsstreugeräte charakteristisch ist, bei denen teilchenförmige Materialien zur Erzielung einer effektiven Streuschwadenweite von nur 1 m bis zu 2,5 m weggeschleudert werden. Zusätzlich verhindert die geringere Streuweite daß Material gegen den Betreiber des Gerätes geschleudert wird. Außerdem ist wegen der Veränderung in der radialen Streuung durch die Streuscheibe das kreisförmige Muster sehr einheitlich. Man erhält eine sehr einheitliche effektive Streuschwadenweite für einen großen Bereich an teilchenförmigen Material, ohne daß eine Abschrägung, also eine Ausdünnung auftritt und ohne daß eine Einstellung des Streumusters erforderlich wird. Die beiden unterschiedlichen Lietblechlängen verhindern auch, daß es an den vier Austrittsöffnungen zu einer Anhäufung von Material kommt. Its der Auslaß offen und die Steuscheibe im Ruhezustand, so baut sich eine geringe Menge an teilchenförmigen Material innerhalb der Ringleiste 24 auf und stoppt den Materialfluß ab. Wird die Drehbewegung der Streuscheibe fortgesetzt, so wird das Material über die Ringleiste 24 hinausgeschleudert und das Gerät arbeitet so, als ob diese nicht vorhanden wäre. Diese Anordnung macht einen An- und Abstellhebel beim normalen Gebrauch überlfüssig und verhindert Materialverlust, wenn das Streugerät ohne Verschließen der Auslaßöffnungen angehalten wird.

**Patentansprüche**

1. Rotationsstreugerät mit einem Behälter (1) für teilchenförmiges Material und einer Streuscheibe (6), die unter dem Behälter (1) angeordnet ist und bei Fortbewegung des Streugeräts in Rotation versetzt wird, wobei der Behälter (1) einen Auslaß (19) mit Auslaßöffnungen (20) aufweist, welche im Zentralbereich des Behälters (1) und in Abständen um dei Auslaßachse herum angeordnet sind, durch deren Öffnungen das zu verteilende Material auf die Streuscheibe (6) fällt, dadurch gekennzeichnet, daß die Auslaßöffnungen (20) derart angeordnet sind, daß das Material auf den Zentralbereich der Streuscheibe (6) abgegeben wird, wobei die Streuscheibe (6) radiale Leitbleche (25, 26) und darüber hinaus eine Ringleiste (24) aufweist, die den den Auslaßöffnungen zugewandten Zentralbereich der Streuscheibe (6) eingrenzt, wobei die Streuscheibe (6) in ausreichender Nähe unterhalb des Behälters (1) montiert ist, so daß bei Nicht-Rotieren der Streuscheibe (6) die Ringleiste (24) das abgegebene teilchenförmige Material innerhalb des eingegrenzten Zentralbereichs der Streuscheibe (6) aufnimmt, um einen weiteren Fluß des teilchenförmigen Materials zu verhindern, nachdem es zu einer Ansammlung des teilchenförmigen Materials innerhalb des eingegrenzten Zentralbereichs gekommen ist.

2. Rotationsstreugerät nach Anspruch 1, dadurch gekennzeichnet, daß die Auslaßöffnungen (20) im gleichen Abstand um den Auslaß (19) herum angeordnet sind.

3. Rotationsstreugerät nach den Ansprüchen 1 oder 2, dadurch gekennzeichnet, daß die Streuscheibe (6) zwei Sätze von radialen Leitblechen (25, 26) aufweist, wobei der erse Satz in einem anderen Abstand vom Zentrum endet als der zweite Satz.

4. Rotationsstreugerät nach einem der Ansprüchen 1 bis 3, dadurch gekennzeichnet, daß die Leitbleche (25, 26) unterschiedlicher Länge wechselweise radial zum Zentrum der Streuscheibe (6) angeordnet sind.

5. Rotationsstreugerät nach einem der Ansprüche 1 bis 4, dadurch gekennzeichnet, daß die Streuscheibe (6) rechteckig ausgebildet ist und die Leitbleche (26) vom Zentrum derselben zu den Ecken und die Leitbleche (25) vom Zentrum derselben zu den Seiten gerichtet sind.

**Revendications**

1. Epandeur rotatif comportant une trémie ou un récipient (1) destiné à contenir la matière particulaire, et un impulseur (6), disposé sous la trémie (1) et qui est mis en rotation lorsque l'épandeur est déplacé, la trémie (1) comportant un passage (19) de sortie ou d'écoulement comportant des ouvertures (20) de sortie, qui sont disposées dans la région centrale de la trémie (1) et à des intervalles autour de l'axe de sortie, ouvertures par lesquelles la matière à répartir tombe sur l'impulseur (6), épandeur caractérisé en ce que les ouvertures (20) de sortie sont disposées de façon à verser la matière sur la partie centrale de l'impulseur (6) cet impulseur (6) présentant des tôles radiales de guidage, ou des ailettes radiales (25, 26) et en outre une nervure annulaire ou couronne (24), qui entoure et délimite la partie central de l'impulseur (6) proche des ouvertures de passage de sortie, l'impulseur (6) étant monté sous la trémie et assez près d'elle pour que, lorsque l'impulseur (6) ne tourne pas, la nervure couronne ou annulaire (24) retienne la matière particulaire déversée à l'intérieur de la partie centrale, ainsi délimitée, de l'impulseur (6), de façon à empêcher les particules de cette matière de continuer à sa déverser une fois qu'une certaine quantité de ces particules s'est amassée dans cette partie centrale entourée.

2. Epandeur selon la revendication 1, caractérisé en ce que les ouvertures (20) de sortie sont équidistantes tout autour du passage (19) d'écoulement.

3. Epandeur selon les revendications 1 ou 2, caractérisé en ce que l'impulseur (6) présente deux jeux d'ailettes (25, 26) radiales, celles du premier jeu se terminant à une distance radiale du centre différente de celle des ailettes du second jeu.

4. Epandeur selon l'une des revendications 1 à 3, caractérisé en ce que les ailettes (25, 26) de longeur différente sont disposées radialement en alternance par rapport au centre de l'impulseur (6).

5. Epandeur selon l'une quelconque des revendications 1 à 4, caractérisé en ce que l'impulseur (6) est rectangulaire et en ce que les ailettes (26) sont dirigées de la partie central de l'impulseur vers ses angles ou coins et les ailettes (25) sont dirigées du centre de l'impulseur vers ses côtés.

**Claims**

1. A rotary spreader, having a hopper (1) for particulate material and an impeller (6), which is disposed beneath the hopper (1) and rotates as the spreader is advanced, wherein the hopper (1) has an outlet (19) having outlet openings (20) which are disposed in the central portion of the hopper (1) and at intervals about the outlet axis, through which openings the material to be distributed drops onto the impeller (6), characterised in that the outlet openings (20) are disposed in such a way that the material is discharged onto the central portion of the impeller (6), wherein the impeller has radial fins (25, 26) and also an annular ridge (24) which encloses the central portion of the impeller (6) facing the outlet openings, wherein the impeller (6) is mounted beneath the hopper (1) in sufficient proximity so that when the impeller (6) is not rotating, the annular ridge (24) contains the discharged particulate material within the enclosed central portion of the impeller (6) to stop further flow of particulate material after build-up of particulate material within the enclosed central portion.

2. A rotary spreader as claimed in claim 1, characterised in that the outlet openings (20) are disposed at uniform intervals about the outlet (19).

3. A rotary spreader as claimed in claim 1 or 2, characterised in that the impeller (6) has two sets of radial fins (25, 26), wherein in the first set terminates at a different distance from the centre than the second set.

4. A rotary spreader as claimed in any of claims 1 to 3, characterised in that the fins (25, 26) of different lengths are alternately disposed radially to the centre of the impeller (6).

5. A rotary spreader as claimed in any of claims 1 to 4, characterised in that the impeller (6) is rectangular and the fins (26) are directed from the centre thereof to the corners and the fins (25) are directed from the centre thereof to the sides.

EP 0 159 686 B1

FIG.4

FIG.1

1

FIG.2

FIG.3

EP 0 159 686 B1

FIG.5

FIG.6

FIG.7

EP 0 159 686 B1